(19) Europäisches Patentamt
European Patent Office
Office européen des brevets

(11) Publication number: **0 510 533 A2**

# EUROPEAN PATENT APPLICATION

(21) Application number: **92106618.9**

(22) Date of filing: **16.04.92**

(51) Int. Cl.5: **C08G 18/63**

(30) Priority: **22.04.91 US 689220**

(43) Date of publication of application:
**28.10.92 Bulletin 92/44**

(84) Designated Contracting States:
**AT BE CH DE DK ES FR GB IT LI LU NL SE**

(71) Applicant: **THE DOW CHEMICAL COMPANY**
**2030 Dow Center, Abbott Road**
**Midland, MI 48640(US)**

(72) Inventor: **Moore, Douglas R.**
**201 Hackberry Nr. 1602**
**Clute, Texas 77531(US)**
Inventor: **Neill, Paul**
**225 Peppermint Drive**
**Lake Jackson, Texas 77566(US)**
Inventor: **Plowman, Keith**
**116 Cardinal**
**Lake Jackson, Texas 77566(US)**
Inventor: **Fogg, Graeme D.**
**76, Churchfields-Barry**
**South Glamorgan, South Wales(GB)**

(74) Representative: **Böhm, Brigitte, Dipl.-Chem.,**
**Dr. et al**
**Kopernikusstrasse 9, Postfach 86 08 20**
**W-8000 München 86(DE)**

(54) **Process for preparing polymer polyols, and polymer polyol so made.**

(57) A polymer polyol is prepared by polymerizing one or more ethylenically unsaturated monomers in a polyol. A high molecular weight stabilizer having polymerizable ethylenic unsaturation and a low hydroxyl functionality is used, which leads to improved dispersion stability at reduced stabilizer level.

EP 0 510 533 A2

This invention relates to a process for preparing polymer polyols via a vinyl polymerization process.

Polymer polyols are well-known products which are used in the preparation of polyurethanes. The polymer polyols of interest herein are polymers of ethylenically unsaturated monomers which are polymerized in situ in a material having a plurality of active hydrogen-containing groups. Such products and processes for their preparation are described, for example, in U.S. Patent Nos. 4,172,825; 4,233,425; 4,242,249; 4,287,323; 4,320,221; 4,350,780; 4,390,645,; 4,394,491; 4,451,255; 4,460,715; 4,574,137; 4,661,531; 4,689,354; 4,745,153 and RE 32,733.

The most significant technical problem in making polymer polyols is that of forming a stable dispersion of particles having a desired particle size. The polymer particles tend to settle out of the continuous phase or to agglomerate. Often, low molecular weight oligomers form and remain dissolved in the continuous phase. These oligomers greatly increase the viscosity of the polymer polyol.

To alleviate this problem, most processes now employ a "stabilizer" or "dispersant", which according to theory becomes situated on the surface of the polymer particles and makes them more compatible with the continuous polyol phase. This stabilizer material is usually formed from a material such as a polyol which is compatible with the continuous phase, and which has been modified to contain induced unsaturation. The stabilizer is believed to copolymerize with the vinyl monomers so that the resulting polymer contains side chains which are soluble in the continuous phase, and thus help stabilize the particle against agglomeration and settling.

Several types of stabilizers are known, but the most effective ones previously known are or are derived from polyethers which are end-capped to introduce terminal polymerizable unsaturation. These capped polyethers may be homopolymerized or copolymerized with monomers such as styrene and/or acrylonitrile to form the actual stabilizer.

Although good results have been obtained with previous stabilizers, especially in conjunction with other process refinements, further improvements are still desired. Quite often, the stabilizer must be used in rather substantial quantities. Since the stabilizer is prepared from rather expensive raw materials, the use of such large quantities is economically disadvantageous. The stabilizer itself is an additional raw material which must be manufactured and stored, so it is desired for that reason as well to minimize its use. Beyond that, these previously known stabilizers are not as effective as desired. It is still desirable to further improve the stability and particle size distribution of the polymer polyols, or to get equivalent stability using less stabilizer.

In addition, the presence of the stabilizer has an effect on the physical properties of polyurethanes made from the polymer polyol. Conventional stabilizers, which often have multiple hydroxyl functionalities, would sometimes tend to cause deficiencies in various physical properties, especially fatigue properties. Also, the stabilizer is believed to contribute in some instances to poor compression sets in polyurethane foams.

For these reasons, it would be desirable to provide a stabilizer useful in preparing a polymer polyol, which stabilizer can be used in relatively small quantities and which provides improved stability and/or particle size distribution in the polymer polyol. It would be further desirable to provide a polymer polyol which is useful to prepare polyurethane foams with improved properties relative to polymer polyols made used a conventional stabilizer.

This invention is a process for preparing a polymer polyol in which at least one ethylenically unsaturated monomer is polymerized in a continuous polyol phase in the presence of an effective amount of a stabilizer to form a dispersion of particles of a polymer of the ethylenically unsaturated monomer in said continuous polyol phase, characterized in that the stabilizer is a polymer having terminal polymerizable ethylenic unsaturation and a number average molecular weight ($M_n$) from 6000 to 100,000, and which contains an average hydroxyl functionality of up to about 1.0 hydroxyl group/molecule.

With this invention, excellent dispersion stability, particle size distribution and other polymer polyol properties are obtained. In addition, these improvements are seen even when the level of stabilizer is relatively small compared to the amounts used in conventional processes. Thus, this invention provides a means by which improved properties can be obtained at lower cost.

In addition, polyurethane foams prepared according to this invention show improvements in certain physical properties, compared to those foams made using conventional stabilizers.

In the process of this invention, a stabilizer is employed which has a low hydroxyl functionality, terminal polymerizable ethylenic unsaturation and a number average molecular weight ($M_n$) in the range of 6000 to 100,000. The $M_n$ is preferably 8000 to 50,000, more preferably 9000 to 15,000. The stabilizer advantageously has an "overall functionality" which in this context refers to the average number of hydroxyl plus terminal ethylenically unsaturated groups per molecule, of from 2 to 6, more preferably 2 to 3, more preferably about 2. The stabilizer also has an average hydroxyl functionality of up to about 1.0, preferably less than about 0.8, more preferably less than about 0.7, most preferably less than about 0.6 hydroxyl groups/molecule, as discussed hereinafter.

The stabilizer is advantageously an organic polymer which is compatible with the "base polyol" of the dispersion. The actual composition of the stabilizer, therefore, is usually chosen with that of the base polyol in mind. Since the base polyol in most cases will be a polyester or polyether, the stabilizer is most preferably a polyester or polyether, accordingly. The most preferred base polyol is a polyether, and therefore the most preferred stabilizer is a polyether as well.

Polyether stabilizers are advantageously polymers of one or more cyclic organic oxides. Among these are the alkylene oxides, substituted alkylene oxide, and other polymerizable alicyclic compounds having an ether linkage in the ring, such as tetrahydrofuran. Suitable alkylene oxides include ethylene oxide, propylene oxide, butylene oxide, epichlorohydrin, styrene oxide and other cyclic ethers which are capable of undergoing a ring-opening polymerization to form a polyether. Since the function of the stabilizer is to improve the stability of the dispersed particles in the base polyol, the composition of the stabilizer is advantageously adapted so it is compatible therewith. Thus, the choice of alkylene oxide will typically be made so that the polyether portion of the stabilizer is of a similar makeup as the base polyol. Since, as discussed more fully hereinafter, the preferred base polyol is a polymer of propylene oxide and/or ethylene oxide, the preferred alkylene oxides for use in making the stabilizer are also propylene and/or ethylene oxide. It is more preferred that the stabilizer be a polymer of propylene oxide or a copolymer of propylene oxide and a minor portion of ethylene oxide. The copolymers of propylene oxide may be either random or block copolymers.

As it is sometimes difficult to prepare a good quality polyether of greater than about 2000 equivalent weight, it is often desirable to form the stabilizer of this invention by the coupling of lower equivalent weight polyethers. This process has several advantages. First, it enables one to use polyethers of relatively low equivalent weight as starting materials. These lower equivalent weight polyethers are both less expensive and of superior quality than very high equivalent weight polyethers. In addition, this technique enables one to controllably select the "functionality" of the stabilizer through the selection of the coupling agent and difunctional polyethers. The coupling agent is a material having a plurality of groups which will react with an alcohol to form a covalent bond with the alcohol oxygen. Examples of such groups include isocyanates, carboxylic acids, acid chlorides, epoxies and esters which can undergo an ester exchange reaction. By selecting a difunctional polyether, the overall functionality of the stabilizer will equal that of the coupling agent. Thus, the coupling of a difunctional polyether with a difunctional coupling agent will form a difunctional stabilizer, whereas the coupling of a difunctional polyether with a trifunctional coupling agent will form a trifunctional stabilizer.

Exemplary coupling agents include polycarboxylic acids such as phthalic acid and terephthalic acid as well as the corresponding acid chlorides and alkyl esters thereof. Also suitable are relatively low molecular weight (2000 or less, preferably 1000 or less), 2 to 4-functional, preferably difunctional, epoxy resins such as glycidyl ethers of bisphenols. Preferred coupling agents include polyisocyanates such as are described hereinafter. Diisocyanates such as toluene diisocyanate (TDI), diphenylmethane diisocyanate (MDI) and MDI derivatives are more preferred on the basis of cost and ease of use in coupling the polyethers.

The coupling reaction is readily completed by forming a mixture of the coupling agent and polyether under conditions such that the coupling reaction occurs. Typically, mild heating can be employed to accelerate the reaction, as well the the use of appropriate catalysts. The formation of esters from polyethers and epoxy resins, for example, is easily done under mild conditions using a suitable catalyst such as a $BF_3$ etherate. The coupling of polyethers with isocyanate compounds is advantageously conducted as described, for example, in U.S. Patent No. 4,546,122. In coupling the polyether, the relative amounts of polyether and coupling agent are chosen so that the coupled polyether has a molecular weight as described before. Less than a stoichiometric amount of coupling agent is used, but the precise amount required in any case will depend on the molecular weight of the polyether, as the lower the molecular weight of the polyether, the more coupling will be necessary to obtain the required molecular weight for the stabilizer.

Good results typically obtained by using the coupling agent at an index (defined as 100 times the equivalents of coupling agent divided by equivalents of polyol) of about 60, preferably about 65, more preferably 75 to 90, preferably about 85. A higher index leads to the formation of a higher equivalent weight coupled polyol.

In the preparation of polyethers through the polymerization of alkylene oxides, or through the coupling procedure described before, terminal hydroxyl groups are formed. Since the stabilizer of this invention has up to about 1.0 hydroxyl group/molecule, it is necessary to cap off a substantial amount of the hydroxyl groups and replace them with polymerizable ethylenically unsaturated groups. This is conveniently done by reacting the hydroxyl-terminated polyether with a difunctional compound having a vinyl group and a coreactive group which reacts with the hydroxyl group to form a bond to the polyether. Unsaturated isocyanates, carboxylic acids, carboxylic acid chlorides, carboxylic acid anhydrides and epoxies are suitable. Unsaturated isocyanates such as isocyanatoethylmethacrylate and $\alpha,\alpha$-dimethyl metaisopropenyl benzylisocyanate (TMI) are preferred. The preparation of such capped polyethers is described, for example, in U.S. Patent Nos. 3,931,450 and 4,390,645. In this invention, sufficient amounts of the hydroxyl groups are reacted so that the resulting stabilizer has an average number of hydroxyl groups/molecule as described before. If desired, essentially all of the hydroxyl groups may be reacted so that the stabilizer contains essentially no free hydroxyls.

The most preferred stabilizers are prepared by reacting a 1000 to 6000 equivalent weight polymer of propylene oxide or copolymer of propylene oxide and ethylene oxide with a diisocyanate at an index of 65 to 85, especially 75 to 85, to form a hydroxyl-terminated oligomer and then capping at least about 50 percent of the remaining hydroxyl groups with a difunctional compound as described above.

A polymer polyol is made according to this invention by polymerizing at least one ethylenically unsaturated monomer in a continuous polyol phase in the presence of an effective amount of the stabilizer described above. The base polyol which comprises the continuous phase of the dispersion is a material having on average a plurality of isocyanate-reactive groups per molecule. A wide variety of such polyols are known to be used in preparing polymer polyols, including those described in columns 3-5 of U. S. Patent No. 4,394,491. However, preferred polyols for preparing flexible foams and other elastomeric polyurethanes are polyether and polyester polyols having an equivalent weight from 500 to 8,000, preferably 800 to 3000, more preferably 1000 to 2500. These preferred polyether and polyester polyols also advantageously have a nominal functionality from 2 to 6, preferably 2 to 4, more preferably 2 to 3. Particularly preferred are the polyether polyols which are polymers of a $C_2$-$C_4$ alkylene oxide or tetrahydrofuran, especially polymers of propylene oxide which may be random copolymerized or block polymerized with up to about 20 weight percent, based on the weight of the total, of ethylene oxide. Most preferred for use in making molded or high resiliency slabstock foam are nominally trifunctional polymers of propylene oxide having 8 to 20 weight percent ethylene oxide end-capping. Most preferred for conventional slabstock foam are nominally trifunctional polymers of propylene oxide and random copolymers of propylene oxide with up to about 15 weight percent ethylene oxide.

For preparing rigid foams, polyethers having an equivalent weight from 85 to 500 and an average functionality of 2 to 8, preferably 3 to 6 hydroxyl groups/molecule are preferred.

The ethylenically unsaturated monomers useful herein are compounds having ethylenically polymerizable unsaturation, other than stabilizer compounds. Suitable such monomers are disclosed in U.S. Patent No. 4,581,418. These include aliphatic conjugated dienes such as butadiene; monovinylidene aromatics such as styrene, $\alpha$-methyl styrene and vinylnaphthylene, including other inertly substituted styrenes; $\alpha,\beta$-ethylenically unsaturated carboxylic acids and esters such as acrylic acid, methacrylic acid, methyl methacrylate and 2-hydroxyethylacrylate; $\alpha,\beta$-ethylenically unsaturated nitriles such as acrylonitrile; acrylamide; vinyl esters such as vinyl acetate, vinyl ethers, vinyl ketones, vinyl and vinylidene halides. Of these, the monovinylaromatics and the $\alpha,\beta$-unsaturated nitriles are preferred, with mixtures of styrene and the $\alpha,\beta$-unsaturated nitriles being especially preferred. Most preferred are mixtures of styrene and acrylonitrile in a weight ratio from 25:75 to 95:5.

The amount of monomers is not especially critical, provided a stable dispersion is prepared. Thus a percent solids of from 1, preferably 10, more preferably 20 to 60, preferably 50, more preferably 45 percent of the weight of the dispersion can be used. In this invention, the "solids" is considered to be equal to the weight of the ethylenically unsaturated monomers used in preparing the dispersion. If a seeding process is used, as discussed below, the "solids" is considered to be equal to the sum of the weight of the ethylenically unsaturated monomers used in preparing the seed dispersion and those used in preparing the product dispersion.

The process is conducted by combining the ethylenically unsaturated monomers with the base polyol in the presence of the stabilizer, under conditions such that the monomers polymerize to form a plurality of discrete polymer particles dispersed in the base polyol. Advantageously, such conditions include an elevated temperature and agitation. Temperatures from 20 to 150, preferably 80 to 130, more preferably 105 to 125°C are usually suitable, depending somewhat on the particular monomers and free radical initiators employed. In addition, the reaction mixture is preferably agitated during the process in order to facilitate the formation of discrete polymer particles.

Although it is possible to add all components to the reaction vessel at the start of the reaction, it is usually preferred to stage the addition of monomers, and more preferred to stage the addition of stabilizer, free radical initiator, and sometimes base polyol as well. The staged addition of these components provides better control of reaction temperatures and provides for a more stable product with a more uniform particle

4

size. In such staged addition process, a small quantity of base polyol, stabilizer, and optionally a seed dispersion are placed in the reaction vessel and heated to the desired polymerization temperature. Then, a monomer stream is added to the reaction vessel under reaction conditions over a suitable period, as described, for example, in U.S. Patent No. 4,460,715. Typically, the addition of monomer stream is conducted over a period of 5 minutes to 5 hours, preferably 15 minutes to 2 hours, more preferably 30 to 90 minutes. A stabilizer stream is also preferably added over a similar period, although it is most preferred to add the stabilizer stream at a rate roughly proportional to the rate of growth of the surface area of the dispersed particles, as described in copending application Serial No. 503,210, filed April 2, 1990. In addition, it is preferred to add a free radical initiator at approximately the same time as the monomer stream, although in a separate stream so the polymerization of the monomers does not occur in any significant amount until the monomers have migrated to the dispersed particles. The free radical initiator and stabilizer are advantageously added as solutions in the base polyol.

Following the addition of all streams, it is usually advantageous to maintain the mixture at an elevated temperature for a suitable period in order to ensure essentially complete reaction of the monomers. Generally, such additional heating is continued for 5 minutes to 2 hours, preferably 5 minutes to 1 hour following the completion of all streams.

It is also preferable to conduct the reaction under an inert atmosphere such as nitrogen or argon, especially if a slight (up to 100 psig) positive pressure thereof is used. This has been found to improve the consistency and filterability of the product.

As mentioned before, a seed dispersion is used in the most preferred embodiment. The seed dispersion preferably has dispersed particles of a vinyl polymer in which the monomers of the monomer stream are more soluble than in the continuous phase. The dispersed seed particles most preferably are polymers of the same monomers which are used to prepare the product dispersion. The seed dispersion advantageously has a solids content of 5 to 50 percent, preferably 10 to 40 percent, more preferably 20 to 30 percent. The seed particles have an average particle size of at least about 30 nm, preferably 50 to 200 nm and more preferably 50 to 150 nm.

The relative proportions of continuous phase, stabilizer, monomers and other components depends somewhat on the particular materials used and the desired attributes and uses for the product dispersion. The amount of stabilizer is chosen so that a stable dispersion is obtained with minimal agglomeration of particles. It is believed that the stabilizer performs at least two separate functions in the preparation of the dispersion. First, it aids in the nucleation of the particles. In addition, it stabilizes the particles against agglomeration and settling. This stabilizer is effective in performing both of these functions. However, in some instances as in the preferred seeding technique, the nucleation of particles is conducted separately from subsequent particle growth. In such cases, the stabilizer used in this nucleation step may be that of this invention, but is not necessarily so. In instances where a different stabilizer is used in the nucleation step, the stabilizer of this invention is used in the particle growth step. It is preferred to use the stabilizer of this invention in the nucleation step, when a separate nucleation step is conducted. When the nucleation and growth of particles are not conducted separately, the stabilizer is that of this invention.

A major advantage of this invention is the efficiency of the stabilizer, resulting in very good results at very low levels of use. The stabilizer of this invention has been found to be effective when used in an amount from 0.1 to 10, preferably 0.5 to 3, more preferably 0.5 to 1.5 percent of the weight of the base polyol.

As mentioned before, it is normally desirable to add a free radical initiator to the reaction mixture during the polymerization process. Sufficient free radical initiator is used to provide a commercially acceptable polymerization rate. Typically, the free radical initiator is used in an amount from 0.1 to 1.75, preferably 0.2 to 1, more preferably 0.25 to 0.8 percent, based on the weight of the monomers. Included among these initiators are peroxyesters, peroxides, persulfates, perborates percarbonates and azo compounds. Examples of such catalysts include hydrogen peroxide, t-butylperoctoate, di(t-butyl)peroxide, lauroyl peroxide, cumene hydroperoxide, t-butyl hydroperoxide, 2,2'-azobis [2,4-dimethyl]pentanenitrile, 2-(t-butylazo)-2-methylbutanenitrile, 2-(t-butylazo)-2,4-dimethylpentanenitrile, azobis(isobutyronitrile)azobis (methylbutyronitrile) as well as mixtures of such catalysts. Of the foregoing catalysts, the azo catalysts, especially azobis(isobutyronitrile) and azobis(methylbutyronitrile) are preferred.

Other additives useful in conducting vinyl polymerization reactions are optionally employed in making the product polymer polyol. Notable among these are chain transfer agents, such as are described, for example, in U.S. Patent No. 4,689,354. Preferred chain transfer agents include the diverse mercaptans such as tertiary dodecyl mercaptan, $\alpha$-toluenethiol, 1-tetradecanethiol, 2-octanethiol, 1-heptanethiol, 1-octanethiol, 2-naphthalenethiol, 1-naphthalenethiol, 1-hexanethiol, ethanethiol, 1-dodecanethiol, benzyl sulfide, iodoform and iodine. The use of the chain transfer agent has been found in some cases to improve the stability and filterability of the product polymer polyol, particularly when used in an amount from 0.1 to 5, preferably 0.25 to 2.5, most preferably 0.5 to 1.0 percent based on the weight of the vinyl monomers.

The resulting product is a dispersion of a vinyl polymer in a polyol, having a percent solids as described before. The dispersed vinyl polymer particles tend to have a narrow particle size distribution, compared to those made in most prior art processes. The average particle size is advantageously 150 to 2000, preferably 200 to 1000, more preferably 300 to 600 nm. The viscosity of the dispersion depends to a significant extent on the percent solids and the composition of the continuous phase, but is preferably not in excess of 12,000 cks, more preferably less than 8,000 cks and most preferably less than 5,000 cks.

The product polymer polyol is useful in the preparation of polyurethanes, as described, for example, in U.S. Patent Nos. 4,390,645 and 4,689,354. The type of polyurethane for which the polymer polyol is most suited will depend to a great extent on the functionality and equivalent weight of the polyol which forms the continuous phase. In general, low equivalent weight (less than about 500, preferably less than about 300), high functionality polymer polyols are particularly useful in preparing rigid polyurethane foams, as crosslinkers for elastomeric polyurethanes and in preparing structural polymers. Higher equivalent weight polymer polyols having a functionality from 2 to 4 are particularly useful for preparing flexible polyurethane foams and in forming the soft segment of non-cellular or microcellular polyurethane elastomers.

The product polymer polyol is especially suitable for preparing elastomeric polyurethanes, such as thermoplastic elastomers and especially flexible polyurethane foam. In preparing such foam, the polymer polyol is reacted with a polyisocyanate in the presence of a blowing agent. Additional isocyanate-reactive materials may also be present, as well as auxiliary agents such as surfactants, catalysts, colorants, antioxidants, fillers and mold release agents.

The polyisocyanate is an organic compound having an average of at least two isocyanate groups per molecule. Aromatic and aliphatic polyisocyanates are useful to make foam, but aromatic polyisocyanates are highly preferred due to their availability and cost. Such polyisocyanates include m-phenylene diisocyanate, 2,4- and/or 2,6-toluene diisocyanate (TDI), hexamethylene-1,6-diisocyanate, 2,4'- and/or 4,4'-diphenylmethane diisocyanate (MDI), polymethylene polyphenylpolyisocyanates (PMDI), hydrogenated MDI or PMDI, cyclohexane-1,4-diisocyanate, tetramethylene-1,4-diisocyanate, naphthylene-1,5-diisocyanate, 1-methoxyphenyl-2,4-diisocyanate, 4,4'-biphenylene diisocyanate, 3,3'-dimethyl-4,4'-biphenyl diisocyanate and toluene-2,4,6-triisocyanate. TDI, MDI and PMDI are preferred. Also useful are prepolymers of the foregoing as well as derivatives of the foregoing which contain carbodiimide, allophonate or biuret linkages.

Blowing agents, for the purposes of this invention, include any material which generates a gas under the conditions of the reaction of the polymer polyol with a polyisocyanate. Water, the diverse low boiling hydrocarbons and halogenated hydrocarbons, the so-called azo compounds which release nitrogen and similar materials are suitable. Suitable hydrocarbons and halogenated hydrocarbons include pentane, hexane, heptane, pentene and heptene, dichlorodifluoromethane, trichlorofluoromethane, dichlorodifluoromethane, 1,1,1-trichloroethane and methylene chloride. Water and mixtures thereof with low boiling hydrocarbons and halogenated hydrocarbons are preferred.

It is often desirable to dilute the polymer polyol with another polyol in preparing foam, especially when the percent solids of the polymer polyol exceed about 20 percent by weight. The polyol suitable for this purpose depends on the desired properties of the polyurethane, and in making flexible foam, those having equivalent weights from 1000 to 2500 and an average functionality from 2 to 4 are preferred. The other polyol is also advantageously compatible with that forming the continuous phase of the polymer polyol. It is normally desirable to use sufficient amount of this other polyol so that the percent solids of the mixture of this polyol and the polymer polyol is 2 to 30, preferably 5 to 20 percent.

Catalysts are also normally used in making polyurethanes and are preferred. The two major types of catalysts used are the tertiary amines and the organometallic catalysts. Exemplary tertiary amine catalysts include, for example, triethylene diamine, N-methyl morpholine, N-ethyl morpholine, diethylethanolamine, N-coco morpholine, 1-methyl-4-dimethylaminoethyl piperazine, 3-methoxy-N-dimethylpropyl amine and bis-(N,N-dimethylaminoethyl)ether. Tertiary amine catalysts are usually used in an amount from 0.1 to 5, preferably 0.2 to 2 parts per 100 parts of polyol (including polymer polyol). Suitable organometallic catalysts include organolead, organoiron, organomercury, organobismuth and preferably organotin compounds. Exemplary organotin compounds include dibutyltindilaurate, dimethyltindilaurate, stannous octoate and stannous chloride. Organometallic catalysts are usually used in an amount from 0.001 to 0.5, preferably 0.05 to 0.2 parts per 100 parts of polyol (including polymer polyol).

A surfactant is also advantageously used in preparing foam, in order to stabilize the reaction mixture against cell collapse until it is sufficiently cured to maintain its cellular configuration. Suitable surfactants include silicone surfactants, most of which are block copolymers containing at least one poly(oxyalkylene) segment and one poly(dimethylsiloxane) segment. Other surfactants include polyethylene glycol ethers of long-chain alcohols, tertiary amine or alkanolamine salts of long-chain alkyl acid sulfate ester, alkyl sulfonic esters and alkyl arylsulfonic acids. When used, 0.1 to 3, preferably 0.3 to 1 part by weight surfactant per 100 parts of polyol (including polymer polyol) is normally adequate.

In addition, crosslinkers like diethanolamine and methylene bis(o-chloroaniline), chain extenders such as $\alpha,\omega$-alkylene glycols and glycol ethers and aromatic diamines, colorants, preservatives and fillers may be employed in the formulation. The use of crosslinkers and chain extenders to modify the processability and properties of the foam is well-known in the art.

The foam may be made in a molding or free rise process. In making molded foam, the reaction mixture is introduced into a mold in which it reacts and expands, filling the mold and thereby assuming the shape of the interior of the mold. In making free rise or slabstock foam, the reaction mixture is permitted to rise freely against the force of gravity. Both the molding and free rise process are well-known and described, for example in U.S. Patent No. 4,485,133.

The resulting foams are useful for a wide range of cushioning and energy-absorbing applications, such as automobile car seats, arm rests and dashboards, packaging, bedding and carpet underlay.

The following examples are given to illustrate the invention and should not be interpreted as limiting it in any way. Unless stated otherwise, all parts and percentages are given by weight.

Example 1

A. Preparation of Stabilizers

Stabilizer A was prepared by reacting a 4000 molecular weight, nominally difunctional, ethylene oxide-capped poly(propylene oxide) with toluene diisocyanate at a 65 index. This reaction was carried out by mixing the TDI with the diol and heating to about 90°C for about 2 hours in the presence of a catalytic amount of dibutyltindilaurate. To the resulting product was added 0.3 equivalent of $\alpha,\alpha$-dimethyl meta-isopropenyl benzyl isocyanate (TMI™, a product of American Cyanamid Corporation) per equivalent of diol initially charged. That mixture was permitted to react for 4 hours at 90°C. The resulting stabilizer (Stabilizer A) had a number average molecular weight ($M_n$) of 8000 to 12000. The average hydroxyl functionality of Stabilizer A was less than about 0.3 OH group/molecule.

Stabilizer B was prepared in like manner, except TDI was used at a 75 index and 0.2 equivalent of TMI™ isocyanate was used per equivalent of starting diol. The resulting Stabilizer B had an $M_n$ of 9000 to 15000 and an average hydroxyl functionality of less than about 0.5 OH group/molecule.

Stabilizer C was prepared in like manner, except TDI was used at an 85 index and 0.1 equivalent of TMI™ isocyanate was used per equivalent of starting diol. The resulting Stabilizer C had an $M_n$ of 10000 to 20000 and an average hydroxyl functionality of less than about 0.7 OH group/molecule.

Stabilizer D was prepared using the same relative amounts of materials as Stabilizer B, but was prepared by simultaneously mixing and reacting the diol, TDI and TMI™ isocyanate. The properties of Stabilizer D were substantially the same as those of Stabilizer B.

B. Preparation of Copolymer Polyols Using Seed Copolymer Polyol Having Particles Nucleated with a Conventional Stabilizer

In a suitable vessel were placed 313 parts of a 25 percent solids 70/30 S/AN seed dispersion in Polyol A. The particles of the seed dispersion have a median diameter of about 90 nm. Polyol A was a 1600 equivalent weight, nominally trifunctional poly(propylene oxide) end-capped with ethylene oxide. The seed dispersion also contained 40.6 percent of a conventional stabilizer, which was prepared by reacting TMI™ isocyanate with a 1600 equivalent weight, nominally trifunctional random copolymer of 87 percent PO and 13 percent EO, at a mole ratio of 0.2:1. To the vessel were added 5110 parts of Polyol A and 40 parts of Stabilizer A. The resulting mixture was heated to 125°C under a nitrogen blanket with agitation. While maintaining the temperature of the mixture at about 125°C, several streams were fed into the vessel. One stream was an acrylonitrile stream, which was fed at a rate of 26.32 parts/minute for 57 minutes. Beginning two minutes after the acrylonitrile stream, a styrene stream was fed at a rate of 63.6 parts/minute for 55 minutes. A mixture containing 16 percent Stabilizer A in Polyol A was fed, beginning at the same time as the styrene stream, for 10 minutes at an initial rate of 67.5 parts/minute, for 10 more minutes at 42.8 parts/minute, and for 34 more minutes at 35.9 parts/minute. Beginning simultaneously with the acrylonitrile stream a mixture of 0.85 percent azobis(2-methylbutyronitrile) in Polyol A was fed to the vessel for 57 minutes at a rate of 39.6 parts/minute and then for 43 more minutes at a rate of 90.7 parts/minute. Also beginning simultaneously with the styrene stream a mixture of 3.3 percent dodecylmercaptan in Polyol A was fed to the vessel for 55 minutes at a rate of 27.5 parts/minute. Following addition of all streams, the mixture was maintained at 125°C and stripped under vacuum to remove volatile materials. The resulting product was designated Copolymer Polyol Sample 1-A. The overall amount of Stabilizer A in this Sample was 2 percent. Sample 1-A was a smooth, high quality dispersion containing 25 percent solids. Its viscosity at 25°C was 2500 cks and the median particle size was 360 nm. This particle size was unexpectedly small, and was attributed to a substantial reduction in the agglomeration of the particles in the early stages of the polymerization due to the efficiency of the stabilizer. Using 12.5 percent of a conventional stabilizer such as that used in preparing the seed particles, a median particle size of about 500 nm was expected. Thus, this stabilizer gave an improved performance at a vastly reduced level of use.

Another copolymer (Sample No. 1-B) polyol sample was made in the same manner, except that the level of stabilizer was reduced to 1.5 percent. Very similar results were obtained, and the viscosity and particle size were the same as Sample 1-A within experimental error.

Because the median particle size of the product copolymer varies inversely with the amount of seed, it was attempted to prepare a copolymer polyol having a median particle size of 500 nm using the same procedure as described for Sample 1-A, except the amount of seed was reduced to 120 parts. The resulting copolymer polyol (Sample 1-C) had a viscosity of 2160 cks and a median particle size of 490 nm. This procedure was again repeated to produce Sample 1-D, except the amount of Stabilizer was reduced to 1 percent. Excellent results were again obtained, as the product had a viscosity of 2410 cks and a median particle size of 510 nm.

Another copolymer polyol (Sample 1-E) was prepared as Sample 1-C, except Stabilizer B replaces Stabilizer A. Sample 1-E had a viscosity of 2540 cks and a median particle size of 4567 nm. Substantially the same results were obtained when the level of Stabilizer B was reduced to 0.5 percent, or when 0.5 percent of Stabilizer D was used instead. A copolymer polyol (Sample 1-F) prepared with 0.25 percent Stabilizer B, but otherwise the same way as Sample 1-E, had a viscosity of 2270 cks and a median particle size of 630 nm. Thus, the stabilizer of this invention was effective in stabilizing the dispersion even at very low levels of use.

The procedure of Sample 1-A was repeated, this time substituting 0.25 percent Stabilizer C for the Stabilizer A. The resulting copolymer polyol (Sample 1-G) had a viscosity of 2030 cks and a median particle size of 520 nm, and was of excellent quality.

C. Nucleation of Copolymer Polyol Particles with Stabilizer of this Invention.

Into a suitable vessel were charged a 6659 parts of a 16 percent solution of Stabilizer B in Polyol A. This solution was heated to 125°C, and maintained at that temperature, with agitation and under a nitrogen blanket, while several feed streams were added. An acrylonitrile stream was fed at a rate of 26.32 parts/minute for 57 minutes. Beginning two minutes after the start of the acrylonitrile stream, a styrene stream was fed for 55 minutes at a rate of 63.6 parts/minute. Beginning 7 minutes after the start of the acrylonitrile stream, a solution of 16 percent Stabilizer B in Polyol A was added at a rate of 29.64 parts/minute. A slurry of 1.77 percent azobis (2-methylbutyronitrile) in Polyol A was added, beginning simultaneously with the start of the acrylonitrile stream, for 59 minutes at an initial rate of 86.7 parts/minute and for 43 additional minutes a the rate of 45.5 parts/minute. Following the addition of all streams, the mixture was stripped under vacuum to remove volatile materials. The product was a 25 percent solids dispersion having a viscosity of 5660 cks and a median particle size of 110 nm.

This dispersion (Seed Dispersion A) was used as a seed dispersion to prepare a product copolymer polyol. Copolymer polyol Sample 1-H was made in the same manner as Sample 1-A, except 213 parts of Seed Dispersion A replaced the seed copolymer polyol used in preparing Sample 1-A, and the level of Stabilizer B added was 0.5 percent. The product was a smooth, stable dispersion having a viscosity of 2370 cks and a median particle size of 490 nm.

Example 2

A. Preparation of Stabilizers E-J

Stabilizer E was prepared in the same general manner as Stabilizer A, except TDI was used at a 60 index and 0.25 equivalent of TMI™ isocyanate was used/equivalent of starting diol. Stabilizer E had an $M_n$ of 7900-8550 and an average of about 0.75 OH group/molecule.

Stabilizer F was prepared in the same general manner as Stabilizer A, except (1) a 4000 MW, nominally difunctional poly(propylene oxide) was substituted for the capped diol used in preparing Stabilizer A, the TDI index was 60, and (3) 0.35 equivalent of TMI™ isocyanate was used per equivalent of starting diol. Stabilizer F had an $M_n$ of about 10,100 and contained about 0.25 OH group/molecule.

Stabilizer G was prepared in the same manner as Stabilizer F, except the TDI index was 65 and 0.2 equivalent of TMI™ isocyanate was used per equivalent of starting diol. Stabilizer G had an $M_n$ of about 8900 and contained about 0.85 OH group/molecule.

Stabilizer H was prepared in the same manner as Stabilizer E, except that a 143 equivalent weight carbodiimide-modified "liquid MDI" was substituted for the TDI used in making Stabilizer E. Stabilizer H had an $M_n$ of about 9600 and an average of about 0.75 OH group/molecule.

Stabilizer I was prepared in the same manner as Stabilizer E, except that pure diphenylmethane diisocyanate (MDI) was substituted for the TDI used in making Stabilizer E. Stabilizer H had an $M_n$ of about 7600 and an average of about 0.75 OH group/molecule.

Stabilizer J was prepared in the same general manner as Stabilizer I, except the MDI index was 85 and 0.1 equivalent of TMI™ isocyanate was used per equivalent of starting diol. Stabilizer J had an $M_n$ of about 13,500 and contained about 0.7 OH group/molecule.

### B. Preparation of Copolymer Polyols 2-A through 2-G

Copolymer Polyol Sample 2-A was prepared using the following general procedure. Into an appropriate vessel were charged 372.5 parts of Polyol B, a 1000 equivalent weight, nominally trifunctional random copolymer of a mixture of 92 percent PO and 8 percent EO and 27.5 parts of Stabilizer B. The vessel's contents were then heated to 125°C with stirring. An initiator slurry of 7.7 parts azobis (2-methylbutyronitrile) in 675 parts Polyol B was prepared, and fed to the reaction vessel at an initial rate of 1.13 parts/minute. A stabilizer mixture containing 327.5 parts Polyol B and 22.5 parts Stabilizer B was fed to the reaction vessel at an initial rate of 0.58 parts/minute, beginning one minute after the initiator slurry feed stream begins. Beginning at the same time as the stabilizer mixture feed stream, a monomer mixture containing 752.5 parts styrene, 322.5 parts acrylonitrile and 8.1 parts dodecyl mercaptan was added at an initial rate of 1.81 parts/minute. All feed streams were added while maintaining the temperature of the vessel's contents at 125°C. One hour after the feed of the monomer mixture and stabilizer mixture, the feed rates for each stream was increased, so that the remaining stabilizer mixture was added over 45 minutes, the remaining monomer mixture was added over 60 minutes and the remaining initiator slurry was added over 90 minutes. After the completion of all feed streams, the vessel's contents were maintained at 125°C for an additional 30 minutes, and the resulting product was stripped under vacuum to remove volatile impurities. The resulting copolymer polyol had a nominal solids content of 43 percent. The median particle size was measured by HDC and was as reported in Table 2. Brookfield viscosity of the dispersion was measured and was as reported in Table 2.

Copolymer polyol Samples 2-B through 2-G were made in the same manner as Sample 2-A, except for the choice of stabilizer. The stabilizer used was as indicated in Table 2. Viscosity and particle size properties were also as indicated in Table 1.

Table 1

| Copolymer Polyol Sample | Stabilizer | Viscosity (cks) | Median Particle Size (nm) |
|---|---|---|---|
| 2-A | E | 5750 | 700 |
| 2-B | B | 7500 | 560 |
| 2-C | I | 5700 | 670 |
| 2-D | J | 6650 | 850 |
| 2-E | F | 8600 | 550 |
| 2-F | G | 7500 | 650 |
| 2-G | H | 6450 | 670 |

All dispersions were smooth and stable, and were useful for preparing a good quality flexible polyurethane foam. This was particularly surprising due to the low level of stabilizer used. When a conventional stabilizer prepared from a 5000 molecular weight polyether triol and 0.2 mole TMI/mole of triol was used, the amount of stabilizer required to obtain a product of similar quality was three times that used in preparing Samples 2-A through 2-G, based on the amount of induced unsaturation contained in the stabilizer.

9

C. Polyurethane Foams Prepared from Copolymer Polyol Samples 2-A through 2-G.

A slabstock flexible polyurethane foam was prepared by rapidly mixing at room temperature 100 parts Copolymer Polyol Sample 2-A, 3 parts water, 1 part of a silicone surfactant, 0.083 parts of a tertiary amine catalyst, 0.08 parts of an organotin catalyst and sufficient TDI to provide a 1.15 isocyanate index. The mixture was poured into an open mold and permitted to rise and cure. The resulting foam was designated Sample 2-A, and its physical properties were as reported in Table 3 following. Flexible Polyurethane Foam Samples 2-C through 2-G were prepared in like manner, substituting Copolymer Polyol Samples 2-C through 2-G, respectively, for Copolymer Polyol 2-A. The physical properties of Foam Samples 2-C and 2-G were determined were as reported in Table 2. For comparison, a Foam made with a copolymer polyol prepared with a conventional stabilizer as described in Example 2-B was also evaluated.

Table

| Property | Foam Number | | | |
|---|---|---|---|---|
| | Control | 2-A | 2-C | 2-G |
| Density, pcf (kg/m$^3$) | 2.01 (32.3) | 2.08 (33.3) | 1.97 (31.6) | 2.08 (33/3) |
| Tensile Str., psi (KPa) | 26.6 (180.5) | 25.9 (178.6) | 25.5 (175.8) | 26.4 (182.0) |
| Tear Str., pli (nm) | 1.9 (333) | 2.0 (350) | 2.0 (350) | 2.0 (350) |
| Elongation, % | 87 | 78 | 86 | 80 |
| Compress. Set, % | 42.4 | 14.9 | 8.6 | 14.5 |
| Resiliency, % | 23 | 20 | 23 | 18 |
| Air Flow, ft3/min (m$^3$/sec) | 2.3 (0.011) | 2.4 (0.011) | 3.4 (0.016) | 2.1 (0.010) |
| 25% ILD, lb. (N) | 123 (547) | 122 (542) | 109 (485) | 115 (512) |
| 65% ILD, lb. (N) | 233 (1036) | 235 (1045) | 212 (943) | 223 (992) |
| ret. 25% ILD, lb. (N) | 58 (258) | 62 (276) | 57 (253) | 61 (271) |
| Hysteresis, % | 48 | 51 | 52 | 53 |
| Modulus | 1.90 | 1.93 | 1.95 | 1.94 |
| Calc. Load Loss, % | 41 | 31 | 21 | 39 |
| Calc. Ht. Loss, % | 3.9 | 4.0 | 3.4 | 3.0 |

From the data in Table 2, it is seen that the properties of the Foam Samples of this invention were quite similar to those of the control except for substantial improvements in Compression Set, and the fatigue properties (Calculated Load Loss and Height Loss). In addition, the Foam Samples of this invention cured slightly more slowly, at least at the initial stages of the reaction, indicating that improved processability was provided by the Copolymer Polyol of this invention.

### Example 3

Stabilizer K was prepared by reacting TDI and a 4500 molecular weight, nominally difunctional poly-(ethylene oxide) at a 65 index, and then capping the resulting material with 0.3 equivalent of TMI/equivalent of starting diol, using the general procedure used to prepare Stabilizer A. This stabilizer had an $M_n$ of 9000 to 12000 and contained about 0.25 OH group/molecule.

Stabilizer L was prepared in like manner, except a 4000 MW nominally difunctional poly(propylene oxide) was substituted for the poly (EO) diol used to prepare Stabilizer J. This stabilizer had an $M_n$ of 8000 to 10,000 and contained about 0.25 OH group/molecule.

A copolymer polyol (Sample 3-A) suitable for producing rigid polyurethane foam was prepared according to the general procedure described in Example 2-B, with several modifications. Stabilizer K was used in place of Stabilizer B. Polyol B was replaced with Polyol C, a 400 molecular weight, nominally trifunctional poly(ethylene oxide). The percent solids was 25 percent. The level of dodecyl mercaptan was 0.75 percent based on monomers. A stable dispersion was obtained, which crystallizes on cooling. However, on reheating, the solids particles redispersed evenly.

When the foregoing experiment was repeated, substituting Stabilizer A for Stabilizer K, the resulting dispersion was not stable. This was believed to be due to the fact that the diol used in making Stabilizer A had a very large oxypropylene content, which rendered it relatively incompatible with Polyol C, an EO homopolymer. Stabilizer K, on the other hand, was made from a homopolymer of ethylene oxide, which was quite miscible with Polyol C. This points out the importance of matching the composition of the stabilizer with that of the base polyol.

Another copolymer polyol was made in the same manner as Sample 3-A, with the following exceptions. Polyol C was replaced with Polyol D, a 400 molecular weight, nominally difunctional poly(PO). Stabilizer L replaced Stabilizer K, and the dodecyl mercaptan level was 3 percent based on monomers. The solids content was 40 percent. A stable dispersion was obtained. Similar results were obtained when a duplicate run was made at 45 percent solids. In addition, stable 45 percent solids dispersions were made in this manner wherein the ratio of styrene to acrylonitrile was changed to 50:50; 30:70 and 0:100.

### Example 4

Stabilizer M was made in the same manner as Stabilizer K, except a 2900 molecular weight, nominally difunctional poly(tetramethylene oxide) polymer replaced the diol used in making Stabilizer K.

Stabilizer M was used to make a copolymer polyol (Sample 4-A) according to the general procedure described in Example 2-B, with the following exceptions. Polyol B was replaced with a 2000 molecular weight, nominally difunctional poly(tetramethylene oxide) polymer. Instead of three feed streams, all additions to the reaction vessel except the initial charge were made in a single feed stream, which was fed over a total period of 60 minutes. A stable dispersion was obtained, which solidified over time due to the crystallization of the continuous polyol phase. It remains stable after remelting. This dispersion was used to prepare a thermoplastic polyurethane which could be subsequently be extruded without substantial breakdown of the particles.

Stabilizer M was also used to make another copolymer polyol like Sample 4-A, except the 2000 molecular weight diol was replaced with a 700 molecular weight, nominally difunctional poly(tetramethylene oxide) polymer. A stable dispersion was obtained.

### Example 5

Stabilizer N was made in the same manner as Stabilizer B, except the polyol used was a 2000 molecular weight, nominally difunctional ethylene oxide-capped poly(propylene oxide). Stabilizer N had an $M_n$ of about 7100 and contained about 0.4 hydroxyl groups/molecule. Copolymer polyol Sample 5-A was prepared in the same manner as described in Example 2-C, except Stabilizer N was used in place of Stabilizer B, and instead of using three feed streams, all additions to the reaction vessel except initial charge were made in a single feed stream, which was fed over a total period of 60 minutes. The resulting dispersion had a viscosity of 5600 cks and a median particle size of 660 nm.

Stabilizer P was made in the same manner as Stabilizer N, except only 0.125 equivalent of TMI™ isocyanate was used per equivalent of starting diol. Stabilizer P had an $M_n$ of about 6900 and contained about 1.0 hydroxyl group/molecule. Copolymer polyol Sample 5-B was made in the same manner as sample 5-A, except for the substitution of Stabilizer P. It had a viscosity of 5400 cps and a median particle size of 690 nm.

Stabilizer Q was made in the same manner as Stabilizer N, except 0.25 equivalent of TMI™ isocyanate was used per equivalent of starting diol. Stabilizer P had an $M_n$ of about 7100 and contained essentially zero hydroxyl groups/molecule. Copolymer polyol Sample 5-C was made in the same manner as Sample 5-A, except for the substitution of Stabilizer Q. It had a viscosity of 8000 cps and a median particle size of 460 nm.

Example 6

Stabilizer R was made in the following manner. A 729.3 part portion of a 1910 equivalent weight, nominally difunctional, ethylene oxide-capped poly(propylene oxide) was heated with 51.5 parts of a 180 equivalent weight diglycidyl ether of bisphenol A and 0.2 parts of a $BF_3$ etherate at 50°C for 2 hours. The resulting coupled polyol was then neutralized with a KOH solution, and heated for two hours at 90°C with 19.2 parts TMI™ isocyanate and 0.2 part of an organotin catalyst. The resulting Stabilizer R had a molecular weight of 9000 to 15,000 and an average functionality of about zero hydroxyl groups/molecule.

Copolymer polyol 6-A was made in the same manner as Copolymer polyol 2-A, except Stabilizer R was used. The resulting dispersion had a viscosity of 5000 cks and a median particle size of 530 nm.

Copolymer polyol 6-B was made in the same manner as Copolymer polyol 5-A, except Stabilizer R was used. The resulting dispersion had a viscosity of 6000 cks and a median particle size of 580 nm.

**Claims**

1. A process for preparing a polymer polyol in which at least one ethylenically unsaturated monomer is polymerized in a continuous polyol phase in the presence of an effective amount of a stabilizer to form a dispersion of particles of a polymer of the ethylenically unsaturated monomer in said continuous polyol phase, characterized in that the stabilizer is a polymer having terminal polymerizable ethylenic unsaturation and a number average molecular weight from 6000 to 100,000, and which contains an average hydroxyl functionality of up to 1.0 hydroxyl group/molecule.

2. The process of Claim 1 wherein the continuous polyol phase is a polyether or mixture of polyethers and the stabilizer is a polyether.

3. The process of Claim 2 wherein the stabilizer has an $M_n$ of 8000 to 50,000, an average hydroxyl functionality of no greater than 0.8 and an overall functionality of 2 to 3.

4. The process of Claim 3, wherein the ethylenically unsaturated monomer is a mixture of styrene and acrylonitrile.

5. The process of Claim 4, wherein the stabilizer has an overall functionality of 2.

6. The process of Claim 5, wherein the continuous polyol phase is a polyether which is a polymer of propylene oxide or a copolymer of propylene oxide and ethylene oxide.

7. The process of Claim 6 wherein the continuous polyol phase has an average equivalent weight of 800 to 3000 and a functionality of 2 to 4.

8. The process of Claim 7 wherein the copolymer polyol has a percent solids of 10 to 45 weight percent.

9. The process of Claim 4, wherein the continuous polyol phase is a poly(propylene oxide) or poly-(ethylene oxide) having an average equivalent weight of 85 to 500 and an average functionality of 3 to 6.

10. The process of Claim 3, wherein a seed dispersion is present.

11. The process of Claim 3, wherein the seed dispersion contains a stabilizer or reaction product thereof, which stabilizer is a polymer having terminal polymerizable ethylenic unsaturation and a number average molecular weight from 6000 to 100,000, and which contains an average hydroxyl functionality of no greater than 1.0 hydroxyl group/molecule.

12. A polymer polyol according to the process of Claim 1.

13. A polymer polyol comprising:
(a) continuous phase which comprises a hydroxyl-terminated polymer,
(b) plurality of particles of a polymer of at least one ethylenically unsaturated monomer dispersed in said continuous phase, and, grafted onto component (b),
(c) from 0.1 to 10 weight percent, based on the weight of component (a), of a stabilizer which is a polymer having terminal polymerizable ethylenic unsaturation and a number average molecular weight from 6000 to 100,000, and which contains an average hydroxyl functionality of up to 1.0 hydroxyl group/molecule.